# EUROPEAN PATENT APPLICATION

(11) **EP 2 172 867 A1**
(43) Date of publication of application: **07.04.2010**
(21) Application number: 08764151.0
(22) Date of filing: 17.06.2008
(51) Int. Cl.: G06F 21/24, G06F 21/00, H04N 7/16, H04N 7/173

(54) **NETWORK AV CONTENT REPRODUCTION TERMINAL, SERVER, AND SYSTEM**

(30) Priority: 20.06.2007 JP 2007162994
(71) Applicant: Panasonic Corporation, Kadoma-shi Osaka 571-8501 (JP)
(72) Inventor: TAKECHI, Hideaki, Osaka 540-6207 (JP); TAMANO, Hirokazu, Osaka 540-6207 (JP); YOSHIURA, Tsukasa, Osaka 540-6207 (JP); NISHIMURA, Takuya, Osaka 540-6207 (JP)
(74) Representative: Grünecker, Kinkeldey, Stockmair & Schwanhäusser Anwaltssozietät
(86) International application number: PCT/JP2008/001556
(87) International publication number: WO 2008/155901

(57) **Abstract**

Methods to set a viewing and/or listening term are classified into two types, which are a fixed-time-length type to limit time length and a fixed-expiration-time type to limit expiration time. And the timings of license acquisition are classified into two types which are an immediate-acquisition type and a point-of-use type. The type of the timing of license acquisition is written to a meta data which is to be sent to a terminal before initiating download. The terminal determines the timing of license acquisition according to the meta data. When contents are point-of-use type, the terminal doesn't acquire a key and an expiration time information until a time of initiating playback. On the other hand, when contents are immediate-acquisition type, the terminal acquires the key and the expiration time information at any point of time. Since the key is acquired at the early timing such as download completion timing, a reaction velocity in response to a playback instruction can be heighten.

## Description

### Technical Field

The present invention relates to a terminal, a server, and a system that enable video and audio contents to be downloaded through a network and played back.

### Background Art

With the development of the Internet, technologies for downloading and playing back contents such as movies and music are becoming commonplace. Many services are provided that allow contents to be downloaded from servers that delivers contents such as movies and music to PCs, audio-video (AV) equipment, mobile phones, and portable devices through a network.

By applying the Digital Rights Management (DRM) technology to such contents delivery services, contents rental systems that permit users to view and/or listen to contents for a limited time only have been implemented.

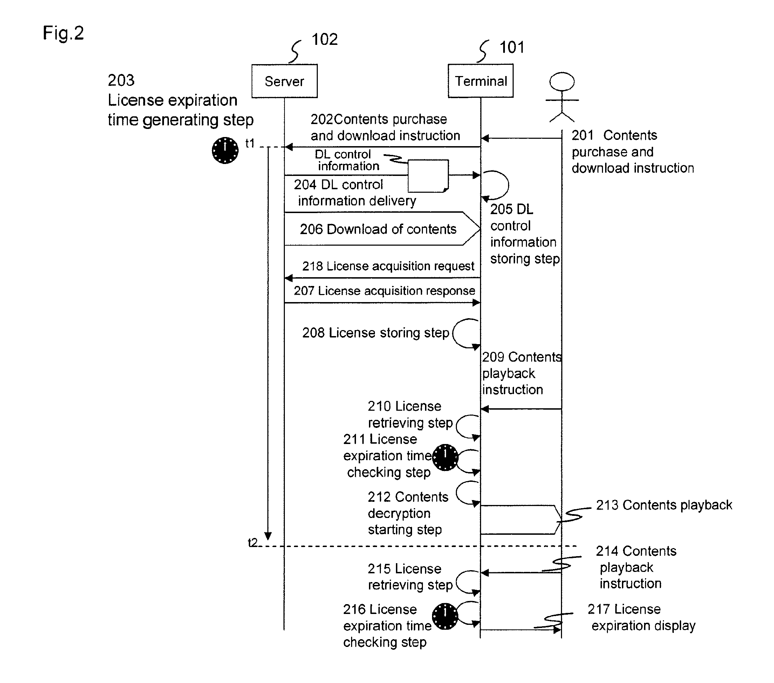

An exemplary operation sequence of such a system is shown in Figure 2. Operation of a first example of the conventional art will be described with respect to Figure 2. A terminal 101 and a server 102 are interconnected through the Internet and can communicate with each other. In this configuration, a user can operate the terminal 101 to access the server 102 by using a Web browser or other communication application and send a contents purchase and download instruction 202. Upon receipt of the contents purchase and download instruction 202, the server 102 generates a term t1 to t2 (time instants) during which the user is permitted to rent the contents and stores the term t1 to t2 in the server 102 at step 203.

The server 102 then delivers download(DL) control information to the terminal 101 as a response to the contents purchase and download instruction 202 at step 204. Here, the DL control information is information used for acquiring contents and a license for the contents and includes, for example, the URL of the contents and the ID of the license. Upon receipt of the DL control information, the terminal 101 stores the DL control information in the terminal 101 at step 205.

The terminal 101 then downloads the contents according to the DL control information at step 206. The download is initiated by issuing a GET instruction of HTTP, for example, for the URL of the contents and is completed by acquiring and storing all of the contents in the terminal 101.

Upon completion of the download, the terminal 101 issues a license acquisition request to the server 102 at step 218. The server 102 delivers the license through a license acquisition response 207 in response to the license acquisition request 218. Here, the license is information for limiting the contents playback time period in which the contents is permitted to be played back and includes, for example, an encryption key for decrypting an encrypted contents and the expiration time of use of the encryption key.

Since the server 102 has generated the term t1 to t2 during which the contents are to be rented at step 203, the server 102 delivers the term t1 to t2 as playback expiration time information included in the license. Upon receipt of the license, the terminal 101 stores the license in the terminal 101 at step 208. With the sequence described above, the download of the contents and acquisition of the license for the contents is completed.

Then, the user operates the terminal 101 to instruct the terminal 101 to play back the downloaded contents at step 209. The terminal 101 retrieves the stored license at step 210, compares the playback expiration time information t1 to t2 in the license with the current time at step 211 and, if the current time is within the playback term, starts decrypting the contents using the encryption key in the license at step 212. As a result of the sequence described above, playback 213 of the contents can be performed.

If the user instructs to play back the contents at step 214 after the expiration of the rental term, comparison at step 216 between the playback expiration time information t1 to t2 in the license retrieved at step 215 and the current time will show the expiration of the rental term. Accordingly, a message will be displayed that notifies the user of the expiration at step 217, without playing back the contents. By the sequence described above, contents rental system that permits viewing and/or listening to the contents for a limited time, has been provided.

A characteristic of the first example of the conventional art is that a particular date and time range (time instants) during which contents are permitted to be used, is specified upon issuance of contents purchase and download instruction 202. This license generation method will be hereinafter referred to as fixed-expiration-time licensing.

However, the first example of the conventional art has a drawback that the time period during which the user can in effect view and/or listen to the contents, decreases when the time of the contents download 206 increases. This drawback does not much matter if the user is licensed for a rental period of one month, for example. In the case of a rental period of several days, however, it will be significantly disadvantageous to the user if the download of the contents takes a few days because of high quality of the contents. While network bandwidths are generally increasing, it is difficult to equally ensure individual download speeds because of server and user cost factors. Download time cannot straightforwardly be reduced when a user purchases more than one contents at a time. Therefore, the disadvantage is a major problem.

However, the first example of the conventional art has an advantage that playback 213 is started relatively quickly after a playback instruction 209 is issued.

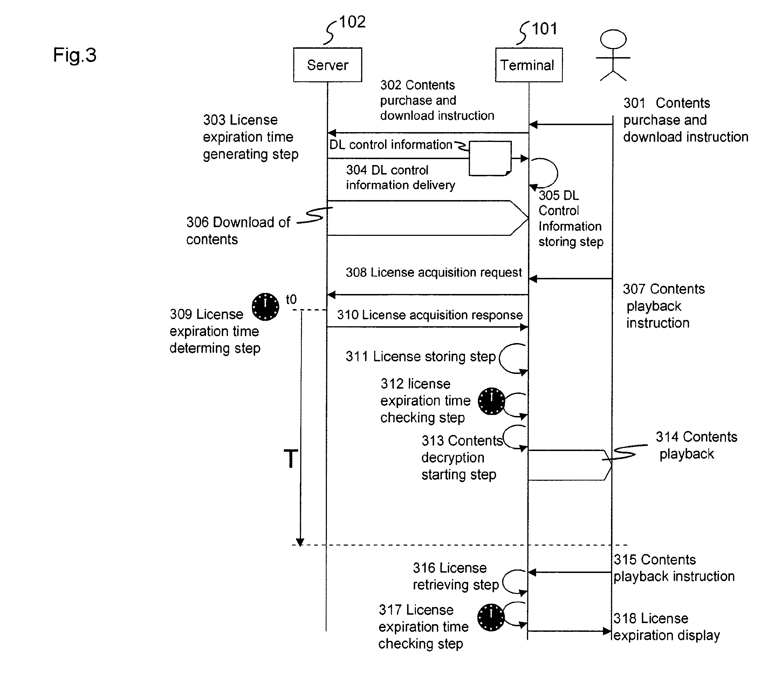

An operation sequence of a second example of the conventional art that can solve the problem with the first example of the conventional art is illustrated in Figure 3. Operation of the second example of the conventional art will be described below with respect to Figure 3. As in the first example of the conventional art, a terminal 101 and a server 102 are interconnected through the Internet and can communicate with each other. In the configuration, a user can operate the terminal 101 to access the server 102 by using a Web browser or other communication application and send contents purchase and download instruction 302.

Upon receipt of the contents purchase and download instruction 302, the server 102 generates a time length T during which the contents are permitted to be rented and stores the time length T in the server 102 at step 303. The server 102 then sends back DL control information to the terminal 101 at step 304 as a response to the contents purchase and download instruction 302. As in the first example of the conventional art, the DL control information includes the URL of the contents and the ID of the license for the contents. Upon receipt of the DL control information, the terminal 101 stores the DL control information in the terminal 101 at step 305. The terminal 101 then downloads the contents according to the DL control information at step 306.

As in the first example of the conventional art, the download is initiated by issuing a GET instruction of HTTP to the URL of the contents and is completed by acquiring and storing all of the contents in the terminal 101. With the sequence described above, the download of the contents is completed.

Then, at step 307, the user instructs the terminal 101 to play back the downloaded contents. Upon receipt of the playback instruction, the terminal 101 issues a license acquisition request to the server 102 at step 308. It is assumed here that the license includes an encryption key used for decrypting the encrypted contents and the expiration time of the encryption key as in the first example of the conventional art. Upon receipt of the license acquisition request, the server 102, at step 309, refers to the time length T during which the contents are permitted to be rented, which has been generated at step 303, and also refers to the current time t0, and thereby determines that the time period from t0 to t0 + T as the time period during which the contents are permitted to be rented. The server 102 delivers t0 to t0 + T as playback expiration time information in the license through a license acquisition response 310 as a response to the license acquisition request 308. Upon receipt of the license, the terminal 101 stores the license in the terminal 101 at step 311.

The terminal 101 then compares the playback expiration time information t0 to t0 + T in the license with the current time at step 312 and, if it is within the time period, starts decrypting of the contents by using the encryption key in the license at step 313. As a result of the sequence described above, playback of the contents 314 can be performed.

If the user instructs to play back the contents at step 315 after the expiration of the rental period, comparison at step 317 between the playback expiration time information t0 to t0 + T in the license retrieved at step 316 and the current time will show the expiration of the rental period, and therefore a message will be displayed that notifies the user of the expiration at step 318, without playing back the contents. By the sequence described above, contents rental system that permits viewing and/or listening to contents for a limited time has been implemented.

According to the second example of the conventional art, the time length T during which the user can in effect view and/or listen to the contents is ensured regardless of the time length required for the downloading 306 of the contents, and therefore the problem with the first example of the conventional art can be solved. A characteristic of the second example of the conventional art is that the time length T during which the contents are permitted to be used, is specified upon issuance of contents purchase and download instruction 302. This license generation method will be hereinafter referred to as fixed-time-length licensing.

However, the second example of the conventional art has a drawback that the time length between issuance of the playback instruction 307 and the start of decryption 313 tends to be long. The period of time from issuance of the playback instruction 307 to the start of decryption 313 includes many delay factors such as communications between the server 102 and the terminal 101, authentication required for DRM, and time period determining operation 309 by the server 102. Therefore, it is difficult to reduce response time before starting playback, depending on network and server loads. If the time between issuance of an instruction and the start of playback is for example 5 to 10 seconds, the user may be irritated.

Another problem is that disconnection of communication or other prevents stable playback, because all the operation described above needs to be performed with normal state during the playback operation.

To solve the problems described above, instead of the simple time period information t_start to t_end, a complex use condition such as "playback is permitted only for a time length T from the time point of start of the first playback" is described in a license, thereby to avoid delay factors at the playback and to ensure the time length T during which the user can in effect view and/or listen to the contents. However, the method presents other problems in that determination of licensing conditions becomes complicated and that it makes it difficult to ensure backward compatibility with the existing systems that use the simple time period information in the t_start to t_end format.

### Disclosure of the Invention

### Problems to be Solved by the Invention

In these circumstances, it was difficult to provide a network contents rental system capable of ensuring the time length T during which a user can in effect view and/or listen to contents while maintaining stability of playback, quick response, simplicity of licensing conditions, and the backward compatibility with the existing systems that use time period information in the t_start to t_end format.

In view of the problems with the conventional systems described above, it is an object of the present invention to provide a terminal, a server, and a system that are capable of implementing network contents rental that can ensure time length during which a user can in effect view and/or listen to contents, enable stable playback to be started in a quick response manner while maintaining simple license conditions and ensure compatibility with the systems that use time period information in the t_start to t_end format.

### Means to Solve the Problems

The 1^{st} aspect of the present invention is a network AV contents playback terminal which connects to a server on a network, acquires an AV contents by using the connection, acquires a license for the AV contents from the server, stores the license, and uses the AV contents for a predetermined period of time based on the stored license, wherein:
prior to acquiring the license for the AV contents from the server, the terminal makes determination as to whether the license is of a fixed-expiration-time type which specifies an available particular date and time range or of a fixed-time-length type which specifies a particular available time length, and changes a timing of acquiring the license from the server in accordance with the determination.

The 2^{nd} aspect of the present invention is the network AV contents playback terminal according to the 1^{st} aspect of the present invention, wherein
the terminal comprises a storage device, and uses the AV contents after acquiring the AV contents and storing the AV contents in the storage device.

The 3^{rd} aspect of the present invention is the network AV contents playback terminal according to the 2^{nd} aspect of the present invention, wherein
if the determination is that the license for the AV contents is of the fixed-expiration-time type, the terminal acquires the license from the server at a time before starting to use the AV contents; and if the determination is that the license for the AV contents is of the fixed-time-length type, the terminal acquires the license from the server at or after starting to use the AV contents.

The 4^{th} aspect of the present invention is the network AV contents playback terminal according to the 3^{rd} aspect of the present invention, wherein:
the terminal receives control information which is used for acquiring the AV contents from the server; and
the terminal makes the determination as to whether the license is of the fixed-time-length type or the fixed-expiration-time type by obtaining a license type included in the control information.

The 5^{th} aspect of the present invention is the network AV contents playback terminal according to the 4^{th} aspect of the present invention, wherein
the terminal comprises an interface output which displays to a user a time range in which the user is permitted to view and/or listen to the AV contents, and
the control information further includes an acquisition expiration time of the license;
the terminal displays time length information for the license and the license acquisition expiration time for the license through the interface output before the terminal acquires the license from the server, and displays a determined expiration time for the license through the interface output after the terminal has acquired the license from the server.

The 6^{th} aspect of the present invention is the network AV contents playback terminal according to the 3^{rd} aspect of the present invention, wherein:
if the license for the AV contents is of the fixed-expiration-time type, the terminal acquires the license from the server upon completion of acquisition of the AV contents.

The 7^{th} aspect of the present invention is the network AV contents playback terminal according to the 3^{rd} aspect of the present invention, comprising an interface output which displays to a user a time range in which the AV contents is permitted to be viewed and/or listened to, wherein:
if the license for the AV contents is of the fixed-time-length type, the terminal displays time length information for the license through the interface output before the terminal acquires the license from the server, and displays a determined expiration time for the license through the interface output after the terminal has acquired the license from the server.

The 8^{th} aspect of the present invention is the network AV contents playback terminal according to the 3^{rd} aspect of the present invention, comprising an interface input and output which is used by a user to instruct the terminal to use the AV contents, wherein:
if the license for the AV contents is of the fixed-time-length type, the terminal acquires the license from the server immediately when the user instructs the terminal, after completion of acquisition of the AV contents, to use the AV contents; and
if the license for the AV contents is of the fixed-time-length type, the terminal displays a caution to the user through the interface output and thereafter acquires the license from the server, in case that the user instructs the terminal to use the AV contents after the start of acquisition of the AV contents but before completion of the acquisition of the contents.

The 9^{th} aspect of the present invention is the network AV contents playback terminal according to the 1^{st} aspect of the present invention, comprising:
a contents acquisition section which acquires an AV contents from the server;
a control information acquisition section which acquires a license for the AV contents from the server; and
a control information determination section which determines, prior to acquiring the license for the AV contents from the server, whether the license is of a fixed-expiration-time type which specifies a particular date and time range in which the contents are permitted to be used or of a fixed-time-length type which specifies a particular time length during which the contents are permitted to be used;
   wherein:
the control information acquisition section changes the timing of acquiring the license from the server in accordance with the determination.

The 10^{th} aspect of the present invention is a network AV contents delivery server which connects to a terminal on a network to deliver AV contents to the terminal, wherein:
the server issues a license for the AV contents to the terminal, the license being available in at least two types, one of the two types being a fixed-expiration-time type which specifies a particular date and time range in which the contents are permitted to be used and the other being a fixed-time-length type which specifies a particular time length during which the contents are permitted to be used; and
prior to delivery of the AV contents, the server sends control information used for acquiring the AV contents to the terminal, the control information containing type information indicating whether the license is of the fixed-time-length type or of the fixed-expiration-time type.

The 11^{th} aspect of the present invention is a network AV contents delivery server which connects to a terminal on a network to deliver AV contents to the terminal, wherein:
the server issues a license for the AV contents to the terminal, the license being available in at least two types, one of the two types being a fixed-expiration-time type which specifies a particular date and time range in which the contents are permitted to be used and the other being a fixed-time-length type which specifies a particular time length during which the contents are permitted to be used; and
   the server responds to a request from the terminal by sending back type information indicating whether the license is of the fixed-time-length type or of the fixed-expiration-time type.

The 12^{th} aspect of the present invention is a network AV contents delivery system which includes a server and a terminal having a storage device, the server and the terminal being interconnected through a network, the server delivering an AV contents to the terminal and issuing a license for the AV contents to the terminal, the terminal storing the issued license and using the AV contents for a predetermined time length based on the stored license, wherein:
the server issues the license for the AV contents to the terminal, the license being available in at least two types, one of the two types being a fixed-expiration-time type which specifies a particular date and time range in which the AV contents are permitted to be used and the other being a fixed-time-length type which specifies a particular time length during which the AV contents are permitted to be used;
prior to delivery of the AV contents, the server sends control information which is used for acquiring the AV contents to the terminal, the control information containing type information indicating whether the license is of the fixed-time-length type or the fixed-expiration-time type; and
prior to acquiring the license for the AV contents from the server, the terminal determines, on the basis of the control information, whether the license is of the fixed-expiration-time type which specifies a particular date and time range in which the AV contents are permitted to be used or the fixed-time-length type which specifies a particular time length during which the AV contents are permitted to be used and, if the determination is that the license for the AV contents are of the fixed-expiration-time type, the terminal acquires the license from the server at a time point before starting to use the AV contents, and if the determination is that the license for the AV contents is of the fixed-time-length type, the terminal acquires the license from the server at or after starting to use the AV contents.

The 13^{th} aspect of the present invention is a network AV contents playback terminal which connects to a server on a network, acquires an AV contents by using the connection, acquires a license for the AV contents from the server, stores the license, and uses the AV contents for a predetermined period of time based on the stored license, wherein:
prior to acquiring the license for the AV contents from the server, the terminal determines whether the license is an immediate-acquisition-type license which can be acquired immediately or a point-of-use-acquisition-type license which cannot be acquired until an instruction to use is issued by a user, and changes the timing of acquiring the license from the server in accordance with the determination.

The 14^{th} aspect of the present invention is the network AV contents playback terminal according to the 13^{th} aspect of the present invention, comprising a storage device, wherein
the terminal uses the AV contents after acquiring the AV contents and storing the AV contents in the storage device.

The 15^{th} aspect of the present invention is the network AV contents playback terminal according to the 14^{th} aspect of the present invention, wherein
if the determination is that the license for the AV contents is of the immediate-acquisition type, the terminal acquires the license from the server at a time point before starting to use the AV contents, and if the determination is that the license for the AV contents is of the point-of-use-acquisition type, the terminal acquires the license from the server upon receipt of an instruction to start to use the AV contents from the user.

The 16^{th} aspect of the present invention is the network AV contents playback terminal according to the 15^{th} aspect of the present invention, wherein:
the terminal receives control information which is used for acquiring the AV contents from the server; and
the terminal makes the determination as to whether the license is of the immediate-acquisition type or the point-of-use-acquisition type by obtaining license acquisition timing type information included in the control information.

The 17^{th} aspect of the present invention is the network AV contents playback terminal according to the 16^{th} aspect of the present invention, comprising an interface output which displays to a user a time range in which the AV contents are permitted to be viewed and/or listened to, wherein:
the control information further includes an acquisition expiration time of the license; and
the terminal displays time length information for the license and the acquisition expiration time of the license through the interface output before the terminal acquires the license from the server, and displays a determined expiration time for the license through the interface output after the terminal has acquired the license from the server.

The 18^{th} aspect of the present invention is the network AV contents playback terminal according to the 15^{th} aspect of the present invention, wherein:
if the license for the AV contents is of the immediate-acquisition type, the terminal acquires the license from the server upon completion of acquisition of the AV contents.

The 19^{th} aspect of the present invention is the network AV contents playback terminal according to the 15^{th} aspect of the present invention, comprising an interface output which displays a time range in which the AV contents are permitted to be viewed and/or listened to, wherein:
if the license for the AV contents is of the point-of-use-acquisition type, the terminal displays time length information for the license through the interface output before the terminal acquires the license from the server, and displays a determined expiration time for the license through the interface output after the terminal has acquired the license from the server.

The 20^{th} aspect of the present invention is the network AV contents playback terminal according to the 15^{th} aspect of the present invention, comprising interface input and output which is used by a user to instruct the terminal to use the AV contents, wherein:
if the license for the AV contents is of the point-of-use-acquisition type, the terminal acquires the license from the server immediately when the user instructs the terminal, after completion of acquisition of the AV contents, to use the AV contents; and
if the license for the AV contents is of the point-of-use-acquisition type, the terminal displays a caution to the user through the interface output and thereafter acquires the license from the server, in case that the user instructs the terminal to use the AV contents after the start of acquisition of the AV contents but before completion of the acquisition of the contents.

The 21^{st} aspect of the present invention is the network AV contents playback terminal according to the 13^{th} aspect of the present invention, comprising:
a contents acquisition section which acquires an AV contents from the server;
a control information acquisition section which acquires a license for the AV contents from the server; and
a control information determination section which determines, prior to acquiring the license for the AV contents from the server, whether the license is an immediate-acquisition-type license which can be acquired immediately or a point-of-use-acquisition-type license which cannot be acquired until an instruction to use is issued by a user;
   wherein
the control information acquisition section changes the timing of acquiring the license from the server in accordance with the determination.

The 22^{nd} aspect of the present invention is a network AV contents delivery server which connects to a terminal on a network and delivers AV contents, wherein:
the server issues a license for the AV contents to the terminal,
types of the timing of acquiring the license include at least two types, one of the two types being an immediate-acquisition type which allows the license to be immediately acquired and the other being a point-of-use-acquisition type which does not allow the license to be acquired until an instruction to use is issued by a user; and
prior to delivery of the AV contents, the server sends control information which is used for acquiring the AV contents to the terminal, the control information containing timing type information indicating whether the timing of acquiring the license is of the immediate-acquisition type or the point-of-use-acquisition type.

The 23^{rd} aspect of the present invention is a network AV contents delivery server which connects to a terminal on a network and delivers AV contents, wherein:
the server issues a license for the AV contents to the terminal,
the license is available in at least two types, one of the two types being a fixed-expiration-time type which specifies a particular date and time range in which the contents are permitted to be used and the other being a fixed-time-length type which specifies a particular time length during which the contents are permitted to be used; and
prior to delivery of the AV contents, the server sends control information to the terminal which is used for acquiring the AV contents, the control information containing license acquisition timing information indicating whether the license is an immediate-acquisition-type license which can be immediately obtained or a point-of-use-acquisition-type license which cannot be acquired until an instruction to use is issued by a user; and
if the license is of the fixed-expiration-time type, the server writes, in the control information, that the license is of the immediate-acquisition type, and if the license is of the fixed-time-length type, the server writes, in the control information, that the license is of the point-of-use-acquisition type.

The 24^{th} aspect of the present invention is a network AV contents delivery system which includes a server and a terminal having a storage device, the server and the terminal being interconnected through a network, the server delivering AV contents to the terminal and issuing a license for the AV contents to the terminal, the terminal storing the issued license and using the AV contents for a predetermined time period based on the stored license, wherein:
the server issues the license for the AV contents to the terminal, the license being available in at least two types, one of the two types being a fixed-expiration-time type which specifies a particular date and time range in which the AV contents are permitted to be used and the other being a fixed-time-length type which specifies a particular time length during which the AV contents are permitted to be used;
prior to delivery of the AV contents, the server sends control information which is used for acquiring the AV contents to the terminal, the control information containing license acquisition timing information indicating whether the license is an immediate-acquisition-type license which can be immediately acquired or a point-of-use-acquisition-type license which cannot be acquired until an instruction to use is issued by a user;
if the license is of the fixed-expiration-time type, the server writes, in the control information, that the license is of the immediate-acquisition type, and if the license is of the fixed-time-length type, the server writes, in the control information, that the license is of the point-of-use-acquisition type; and
prior to acquiring the license for the AV contents from the server, the terminal determines on the basis of the control information whether the license is of the immediate-acquisition type or the point-of-use-acquisition type, and if the terminal determines that the license for the AV contents is of the immediate-acquisition type, the terminal acquires the license from the server at a time point before starting to use the AV contents, and if the terminal determines that the license for the AV contents is of the point-of-use-acquisition type, the terminal acquires the license from the server at or after starting to use the AV contents.

### Advantages of the Invention

As has been described above, according to the present invention, there can be implemented network contents rental capable of ensuring time length during which a user can in effect view and/or listen to contents, enabling stable playback to be started in a quick response manner while maintaining simple licensing conditions and ensuring compatibility with the systems that use time period information in the t_start to t_end format.

The present invention has a number of advantageous effects. For example, contents available time periods can be presented to a user in a clearly understandable manner even in a case where a fixed-expiration-time-type contents and a fixed-time-length-type contents are hosted at the same time. A caution required to be presented at a chasing playback(time shift playback or trace playback) of a fixed-time-length-type contents can be presented to the user, and server facilities do not need to be maintained for a long period of time for the fixed-time-length-type contents that are not viewed or listened to.

### Brief Description of the Drawings

Figure 1 illustrates a configuration of a system according to an embodiment of the present invention.
Figure 2 illustrates a communication sequence between a terminal and a server in a first example of the conventional art.
Figure 3 illustrates a communication sequence between a terminal and a server in a second example of the conventional art.
Figure 4 illustrates a communication sequence between a terminal and a server in fixed-expiration-time rental according to a first embodiment of the present invention.
Figure 5 illustrates a communication sequence between a terminal and a server in fixed-time-length rental according to a first embodiment of the present invention.
Figure 6 illustrates a communication sequence between a terminal and a server in chasing playback in fixed-time-length rental according to the first embodiment of the present invention.
Figure 7 illustrates a communication sequence between a terminal and a server in immediate-acquisition rental according to a second embodiment of the present invention.
Figure 8 illustrates a communication sequence between a terminal and a server in point-of-use rental according to the second embodiment of the present invention.
Figure 9 illustrates a communication sequence between a terminal and a server in chasing playback in point-of-use rental according to the second embodiment of the present invention.

### Description of Symbols

- 101: Terminal
- 102: Server
- 103: Network interface(IF)
- 104: Contents acquisition section
- 105: Storage section
- 106: Playback section
- 107: Control information acquisition section
- 108: Control information storage section
- 109: Control information determination section
- 110: Information display section
- 111: Operation input section
- 112: Router
- 113: Content delivery section
- 114: Storage device
- 115: Control information delivery section
- 116: Network
- 117: LAN
- 118: Router
- 119: Information display
- 120: Operation input
- 121: Playback output terminal
- 201: Contents purchase and download instruction
- 202: Contents purchase and download instruction
- 203: License expiration time generating step
- 204: DL control information delivery
- 205: DL control information storing step
- 206: Download of contents
- 207: License acquisition response
- 208: License storing step
- 209: Contents playback instruction
- 210: License retrieving step
- 211: License expiration time checking step
- 212: Contents decryption starting step
- 213: Contents playback
- 214: Contents playback instruction
- 215: License retrieving step
- 216: License expiration time checking step
- 217: License expiration display
- 218: License acquisition request
- 301: Contents purchase and download instruction
- 302: Contents purchase and download instruction
- 303: License expiration time generating step
- 304: DL control information delivery
- 305: DL control information storing step
- 306: Download of contents
- 307: Contents playback instruction
- 308: License acquisition request
- 309: License expiration time determing step
- 310: License acquisition response
- 311: License storing step
- 312: license expiration time checking step
- 313: Contents decryption starting step
- 314: Contents playback
- 315: Contents playback instruction
- 316: License retrieving step
- 317: License expiration time checking step
- 318: License expiration display
- 401: Contents purchase and download instruction
- 402: Contents purchase and download instruction
- 403: License expiration time generating step
- 404: License type writing step
- 405: DL control information delivery
- 406: DL control information storing step
- 407: Download of contents
- 408: License type determination
- 409: License acquisition request
- 410: License acquisition response
- 411: License storing step
- 412: Contents playback instruction
- 413: License retrieving step
- 414: License expiration time checking step
- 415: Contents decryption starting step
- 416: Contents playback
- 417: Contents playback instruction
- 418: License retrieving step
- 419: License expiration time checking step
- 420: License expiration display
- 501: Contents purchase and download instruction
- 502: Contents purchase and download instruction
- 503: License expiration time generating step
- 504: License type writing step
- 505: DL control information delivery
- 506: DL control information storing step
- 507: Download of contents
- 508: License type determination
- 509: Contents playback instruction
- 510: License acquisition request
- 511: License expiration time determining step
- 512: License acquisition response
- 513: License storing step
- 514: License expiration time checking step
- 515: Contents decryption starting step
- 516: Contents playback
- 517: Contents playback instruction
- 518: License retrieving step
- 519: License expiration time checking step
- 520: License expiration display
- 601: Download of contents
- 602: Contents playback instruction
- 603: License type determination
- 604: Caution displaying step
- 605: Playback confirmation
- 606: Chasing playback
- 701: Contents purchase and download instruction
- 702: Contents purchase and download instruction
- 703: License expiration time generating step
- 707: License type writing step
- 705: DL control information delivery
- 706: DL control information storing step
- 707: Download of contents
- 708: License acquisition timing type determination
- 709: License acquisition request
- 710: License acquisition response
- 711: License storing step
- 712: Contents playback instruction
- 713: License retrieving step
- 714: License expiration time checking step
- 715: Contents decryption starting step
- 716: Contents playback
- 717: Contents playback instruction
- 718: License retrieving step
- 719: License expiration time checking step
- 720: License expiration display
- 801: Contents purchase and download instruction
- 802: Contents purchase and download instruction
- 803: License expiration time generating step
- 804: License type writing step
- 805: DL control information delivery
- 806: DL control information storing step
- 807: Download of contents
- 808: License acquisition timing type determination
- 809: Contents playback instruction
- 810: License acquisition request
- 811: License expiration time determining step
- 812: License acquisition response
- 813: License storing step
- 814: License expiration time checking step
- 815: Contents decryption starting step
- 816: Contents playback
- 817: Contents playback instruction
- 818: License retrieving step
- 819: License expiration time checking step
- 820: License expiration display
- 901: Download of contents
- 902: Contents playback instruction
- 903: License type determination
- 904: Caution displaying step
- 905: Playback confirmation
- 906: Chasing playback

### Best Mode of Carrying Out the Invention

Embodiments of the present invention are described with reference to drawings.

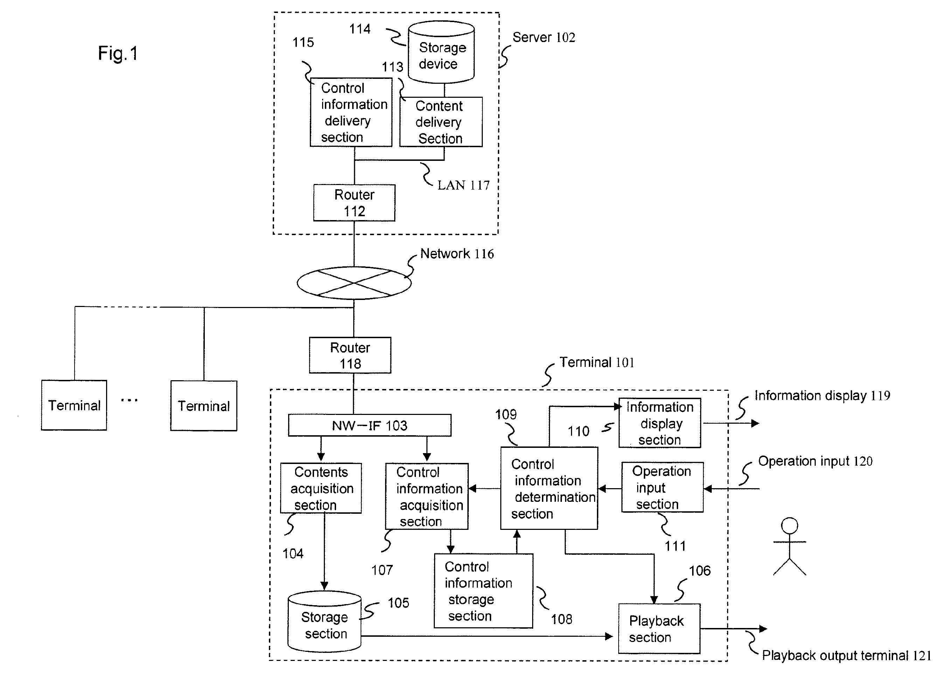

Figure 1 illustrates a configuration of a system according to a first embodiment of the present invention.

A terminal 101 and a server 102 are interconnected through a network 116. The terminal 101 is connected onto the network 116 typically by using a router 118 that relays IP communications. It is assumed that multiple terminals having a configuration similar to that of the terminal 101 are also connected onto the network 116. The terminal 101 includes a network interface 103, a contents acquisition section 104, a storage section 105, a playback section 106, a control information acquisition section 107, a control information storage section 108, a control information determination section 109, an information display section 110, and an operation input section 111.

The terminal 101 presents information display 119 to a user through the information display section 110 and further has such function to, on receiving an operation input 120 from the user through the operation input section 111, download an AV contents file from the server 102 through the network interface 103 and the contents acquisition section 104 according to the operation input 120 and to store the AV contents file in the storage section 105, and has such further function to play back the AV contents file stored in the storage section 105 through the playback section 106, thereby outputting the AV contents to the playback output terminal 121.

Here, the AV contents file is, for example, but not limited to, a real-time data including video and audio and may be an MPEG2 or MP 3 files. The playback output terminal 121 may be an AV terminal such as an HDMI terminal.

The terminal 101 also has the function of acquiring control information for an AV contents file from the server 102 and storing the control information in the control information storage section 108, the function of making a determination at the control information determination section 109 on the basis of the control information stored in the control information storage section 108, and the function of permitting playback by the playback section 106 on the basis of the determination and of displaying a playback expiration time and information as to whether playback is permitted or not through the information display section 110 to the user. The control information in the first embodiment includes download control information and a license.

The server 102 includes a contents delivery section 113, a storage device 114, a control information delivery section 115, a router 112, and a LAN 117. The contents delivery section 113 and the control information delivery section 115 are servers each including a CPU, operate independently and they are interconnected through the LAN 117 provided at the server site, and operate together to provide download server functionality as a whole.

The contents delivery section 113 includes the storage device 114 and is capable of causing an AV contents file stored in the storage device 114 to be downloaded to the terminal 101 through the network 116. The server 102 in the first embodiment also includes other components such as an HTML server and a database, not shown, and provides an HTML contents purchase page to users, and it manages user accounts and contents viewing and listening expiration times, and also performs other processing.

The server 102 has the function of issuing both of a fixed-expiration-time-type license that specifies a particular time and date range in which contents are permitted to be used and a fixed-time-length-type license that specifies a time length T during which contents are permitted to be used, as kinds of contents viewing and listening expiration times management, and provides rental under one of the two types of licensing conditions according to user's demand and each individual contents.

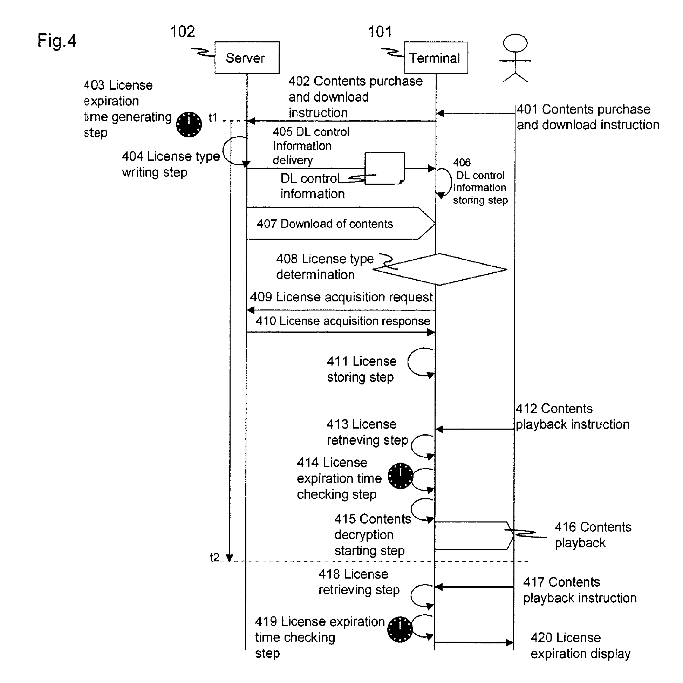

Figure 4 illustrates an operation and communication sequence between the terminal and the server when a user rents contents under a fixed-expiration-time-type license in the first embodiment. The operation and communication procedure will be described below in order with respect to Figure 4. The terminal 101 and the server 102 in Figure 4 have the same configurations as the equivalent elements shown in Figure 1 and therefore are labeled with the same reference numerals. Components such as a network that perform only conventional operation are omitted from the figure.

First, a user operates the terminal 101 with a purchase and DL instruction 401 to connect to the server 102 by using a Web browser or other communication application and thereby an AV contents file purchase and DL instruction 402 is sent including an instruction to download the AV contents file under a fixed-expiration-time rental condition. Upon receipt of the contents purchase and download instruction 402, the server 102, at step 403, generates a license that permits to use the contents for the account of the user under the fixed-expiration-time rental condition.

Specifically, the license generation procedure is accomplished by determining a particular date and time range t1 to t2 in which the contents are permitted to be used, writing the date and time range t1 to t2 in the license, and storing it in the control information delivery section 115 in the server 102. Other items of information such as the ID of the licensee terminal 101, the ID of the AV contents file, and an encryption key for the AV contents file, are also written in the license.

Then, at step 404, the server 102 writes type information indicating whether the license is of the fixed-time-length type or the fixed-expiration-time type in the DL control information. Since the license has been generated as a fixed-expiration-time-type license at step 403, the server 102 writes information indicating that the license is of the fixed-expiration-time type. Here, the DL control information is information used for acquiring contents and the license for the contents and includes the license type information as well as the URL of the contents and the ID of the license. Then, the server 102 sends the DL control information to the terminal 101 at step 405 as a response to the contents purchase and download instruction 402.

Upon receipt of the DL control information, the terminal 101 stores the DL control information in the control information storage section 108 in the terminal 101 at step 406. The terminal 101 then downloads the contents according to the DL control information at step 407. The download is initiated by an issuance of a GET instruction of HTTP to the URL of the contents which is written in the DL control information, and is completed when all of the contents are acquired and stored in the storage section 105 in the terminal 101.

After completion of the download of the contents, at step 408, the terminal 101 reads the DL control information stored in the control information storage section 108 in the terminal 101 and writes it into the control information determination section 109 where the type of the license is determined. Since the type information indicating the fixed-expiration-time type has been written in the DL control information at step 404, the determination is that the license is of the fixed-expiration-time type. If the determination is that the license is of the fixed-expiration-time type, the terminal 101 according to the present invention determines that the terminal 101 may acquire the license at any point of time before a playback instruction is issued by the user.

The control information acquisition section 107 of the terminal 101 according to the first embodiment immediately sends a license acquisition request 409 to the server 102 when it determines that the license is of the fixed-expiration-time type. Accordingly, in a case of a fixed-expiration-time type the terminal 101 issues the license acquisition request immediately after the completion of the download.

The server 102 searches the control information delivery section 115 for the ID of the licensee terminal 101 and the ID of the AV contents file to identify the license and delivers the license through a license acquisition response 410 as a response to the license acquisition request 409. Upon receipt of the license, the terminal 101 stores the license in the terminal 101 at step 411. By passing through the sequence described above, download of the contents and acquisition of the license are completed.

It is assumed that the user then operates the terminal 101 to instruct the terminal 101 to play back the downloaded contents at step 412. The terminal 101 retrieves the license stored at step 413, compares the playback expiration term information t1 to t2 in the license with the current time at step 414 and, if the current time is within the term, starts decrypting the contents by using the encryption key in the license at step 415. By following the sequence, playback 416 of the contents can be performed.

If the user instructs to play back the contents after expiration of the rental period at step 417, comparison of the playback expiration time information t1 to t2 in the license retrieved at step 418 with the current time at step 419 will indicate the expiration of the rental period and therefore a message indicating the expiration will be presented to the user at step 420 without performing playback. With the sequence described above, a contents rental system that permits contents viewing and listening under the fixed-expiration-time condition can be implemented.

In the first embodiment, the terminal 101 performs license type determination and issuance of a license acquisition request immediately after completion of download. Therefore, the first embodiment has the advantage that the license can be acquired in a stable manner because the determination and issuance of the license acquisition request are performed while communication load is not placed on the terminal 101 after completion of download and because communication has been being successfully performed until just before the license acquisition. The first embodiment has another advantage that the server 102 can detect successful completion of the download by receipt of the license acquisition request.

As an alternative to the timing of license acquisition described above, the determination of the license type and issuance of the license acquisition request may be performed immediately before starting the download. According to this method, like the method described above, the license can be acquired while communication load is not place on the terminal 101 and in a state where the same communication conditions under which the contents will be downloaded can be expected. The method has additional advantages that in the event of license acquisition failure, useless download of the contents can be avoided and the so-called chasing playback in which contents are played back while the contents are being downloaded, can be readily performed.

As another alternative to the timing of license acquisition described above, the determination of the license type and issuance of the license acquisition request may be performed immediately after acquisition of the DL control file. This method has advantages that, like the method described above, the license can be acquired in a stable manner because communication load is not placed on the terminal 101 and because the conditions are likely to be the same as that of the time of successful acquisition of the DL control file immediately before the license acquisition, and that useless download of the contents can be avoided in the event of license acquisition failure, and further that so-called chasing playback in which contents are played back while downloading the contents, can be readily performed. This method has additional advantages that when download of contents cannot immediately be started because there is more than one contents or for some other reason, a license condition for the contents can be immediately determined at the time the user has issued the instruction and the user can resolve an abnormality, if any, immediately in an interactive manner.

While license type information is written in DL control information and delivered in the first embodiment, the present invention is not so limited. For example, the terminal 101 may ask the server 102 about the license type. With this method, the server 102 can provide more flexible services such as changing license condition and type while applying the same DL control information.

On the other hand, writing license type information in DL control information or in similar information that is delivered at the same timing of the DL control information and delivering the license type information at the time of the DL instruction as in the second embodiment, have many advantageous effects. For example, the number of transmissions can be reduced. In addition, since license type information is registered in the terminal at the time the result of the DL instruction is registered, the user can readily check the license condition of contents registered in the terminal which is ready to be downloaded. Furthermore, license type information can be separately and readily delivered by using DL control information which can be more simply delivered prior to acquisition of the license itself which needs strict authentication and encryption.

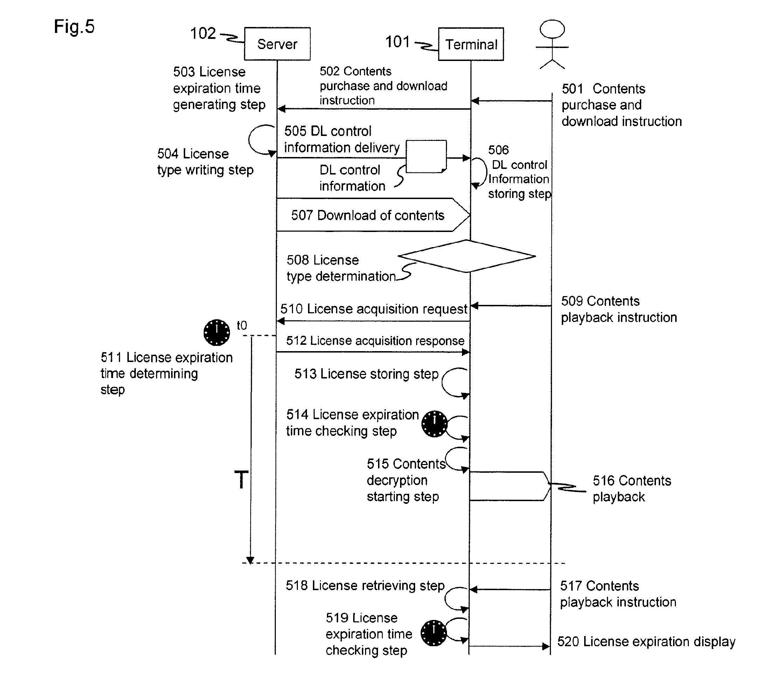

Figure 5 shows an operation and communication sequence between a terminal and a server in an example in which a user rents contents under a fixed-time-length-type license according to the first embodiment. The operation and communication procedure will be described below in order with respect to Figure 5. The terminal 101 and the server 102 in Figure 5 have the same configurations as the equivalent elements illustrated in Figure 1 and therefore are labeled with the same reference numerals. Components such as a network that performs only conventional operation are omitted from the figure.

First, a user operates the terminal 101 with a purchase and DL instruction 501 to connect to the server 102 by using a Web browser or other communication application and an AV contents purchase and DL instruction 502 is sent including an instruction to download the AV contents file under a fixed-time-length-type rental condition. Upon receipt of the contents purchase and download instruction 502, the server 102, at step 503, generates a license that permits to use the contents for the account of the user under the fixed-time-length-type rental condition.

Specifically, the license generation procedure is accomplished by storing a time length T during which the contents are permitted to be used, in a control information delivery section 115 in the server 102. Other items of information such as the ID of the licensee terminal 101, the ID of the AV contents file, and an encryption key for the AV contents file are also written in the license. Then, the server 102 writes type information indicating the type of the license indicating whether the license is of the fixed-time-length type or the fixed-expiration-time type in DL control information at step 504. Since the license has been generated as a fixed-time-length-type license at step 503, the server 102 writes type information indicative of the fixed-time-length type in the DL control information. Here, the DL control information is information used for acquiring contents and a license for the contents and includes the license type information as well as the URL of the contents and the ID of the license. The time length T during which the contents are permitted to be used is also written. In addition, the time limit t3 by which the license can be acquired is written.

The server 102 then delivers the DL control information to the terminal 101 at step 505 as a response to the contents purchase and download instruction 502. Upon receipt of the DL control information, the terminal 101 stores the DL control information in the control information storage section 108 in the terminal 101 at step 506.

The terminal 101 then downloads the contents according to the DL control information at step 507. The download is initiated by issuing a GET instruction of HTTP to the URL of the contents, which is written in the DL control information, and is completed by acquiring and storing all of the contents in a storage section 105 in the terminal 101.

After completion of the download of the contents, the terminal 101 reads the DL control information stored in the control information storage section 108 in the terminal 101 and writes it into a control information determination section 109 where the type of the license is determined at step 508. Since the type information indicating the fixed-time-length type has been written in the DL control information at step 504, the determination is that the license is of the fixed-time-length type. If the determination is that the license is of the fixed-time-length type, the terminal 101 according to the first embodiment determines that the terminal 101 should not acquire the license until it receives a playback instruction from the user.

Accordingly, the terminal 101 performs nothing but waits for an instruction from the user. It is assumed here that the user then operates the terminal 101 at step 509 to instruct the terminal 101 to play back the downloaded contents. Since the terminal 101 does not hold the license required for playing back the contents, the terminal 101 immediately sends a license acquisition request 510 to the server 102.

Upon receipt of the license acquisition request 510, the server 102 determines a license term, that is, a licensed rental period, at step 511. Specifically, the determination of the license term is accomplished by searching the control information delivery section 115 for the ID of the licensee terminal 101 and the ID of the AV contents file to identify the license, by retrieving a permitted time length T, by determining the sum of the current time t0 and T as the expiration date and time, by establishing the license terms as the period between t0 to t0 +T, and by writing the license term in the license.

The server 102 then delivers the license through a license acquisition response 512 as a response to the license acquisition request 510. Upon receipt of the license, the terminal 101 stores the license in the terminal 101 at step 513. Passing through the sequence described above, the license acquisition is completed.

Then, the terminal 101 compares the playback expiration time information t0 to t0 + T in the license with the current time at step 514 and, if the current time is within the term, starts decrypting the contents by using the encryption key in the license at step 515. As a result of the sequence described above, the contents become ready for playback 516.

If the user issues a contents playback instruction at step 517 after the rental period has expired, comparison at step 519 between the playback expiration time information t0 to t0 +T in the license retrieved at step 518 and the current time will show the expiration of the rental time period. Accordingly, a message indicating the expiration will be presented to the user at step 520 without playing back the contents. By following the sequence described above, a contents rental system that permits a user to view and/or listen to contents under a fixed-time-length can be implemented.

In the period from step 508 to step 509 of the sequence in Figure 5, the fixed-time-length-type license is held but there is no determined playback term for contents for which the first playback instruction has not been received. This may present the following two issues.

A first issue is that when the user displays a contents list on the terminal 101, the term cannot be displayed. A second issue is that facilities of the server 102 and license information need to be maintained for a long period of time in case that the user does not issue a playback instruction for a considerably long period of time in this state.

In the first embodiment, the first issue is dealt with by displaying time length information T for a license of the fixed-time-length type through an interface output before the license is acquired from the server 102 and, after the license is acquired from the server 102, by displaying a determined term for the license through the interface output. Since the permitted time length T has also been written in the DL control file at step 504, a message, for example "You can enjoy the contents for 7 days after a first playback." can be displayed on the basis of T even prior to step 509.

Once step 509 has been completed, the license is acquired and time period t0 to t0 + T is determined. Accordingly, a message, for example "You can enjoy the contents until date MM-DD." can be displayed and, when time t0 + T is reached, the message can be replaced with a message such as "Rental time has expired". In this way, a display that indicates the state clearly to the user can be provided.

In the first embodiment, the second issue is dealt with by providing a time limit by which the license can be acquired. Since the time limit t3 by which the license can be acquired is written in the DL control file at step 504, the terminal 101 can avoid attempting to acquire the license if a playback instruction 509 is issued at or after time limit t3, or may attempt to acquire the license from the server 102 at time t3 if a playback instruction 509 has not been issued until the time limit t3. As a result, the server 102 needs to maintain the facilities of the server 102 and license information only for some short period of time beyond time t3. If such t3 is provided in the first embodiment, a message, for example "You can enjoy the contents for 7 days after the first playback. You can start the first playback by the date MM-DD" can be displayed on the basis of T and t3 prior to step 509, of course.

There is another issue that the so-called chasing playback in which contents are played back while the contents are being downloaded, cannot be performed during the download at steps 407 and 507 in the sequences in Figures 4 and 5 because the license has not yet been acquired.

As has been described, in the case of a fixed-expiration-time-type license, the issue can be dealt with by changing the license acquisition timing to a time point immediate before the start of download or to a time point immediate after acquisition of a DL control file in the first embodiment. If the license acquisition timing is set to a time point immediately after the start of download, the issue can be dealt with by acquiring the license immediately after receipt of a playback instruction from the user during the download.

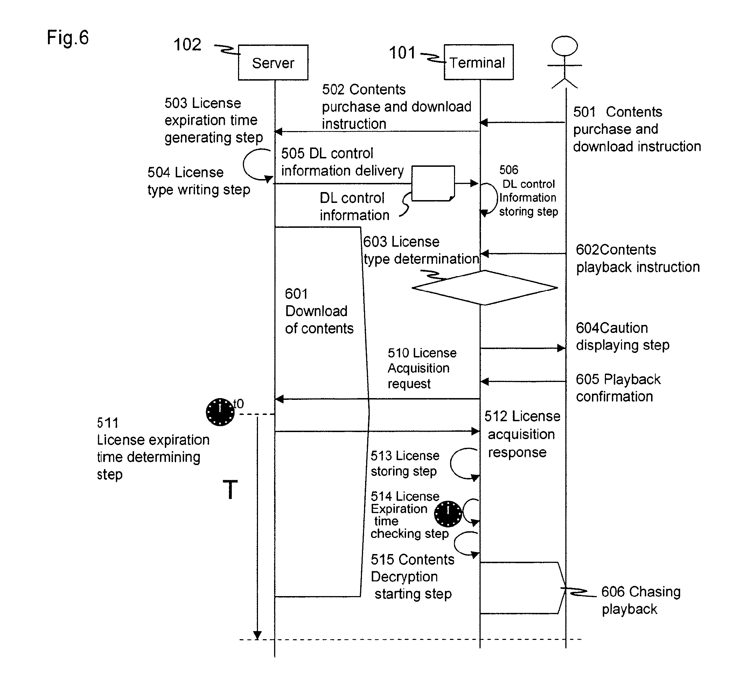

A chasing playback method for a fixed-time-length-type license will be described with respect to Figure 6. Steps 501 through 506 of Figure 6 are exactly the same as steps 501 through 506 of Figure 5 and therefore the description of these steps will be omitted. At step 601, when a chasing playback instruction 602 is received from a user during contents download in step 601, the terminal 101 reads DL control information stored in the control information storage section 108 of the terminal 101 and writes it into the control information determination section 109, where the license type is determined 603. Since type information indicating the fixed-time-length type has been contained in the DL control information at step 504, it is determined that the license is of the fixed-time-length type.

In the first embodiment, if the terminal 101 determines that a license is of the fixed-time-length type, the terminal 101 determines it should not acquire the license until receipt of a playback instruction from the user. In the implementation in which chasing playback is possible, the terminal 101 may acquire the license here because the terminal 101 has already received the playback instruction 602. In this case, however, a viewing and/or listening term would be determined by acquisition of the license even if the download of the contents 601 was not successfully completed or took a considerably long time. As a result, the user could not be able to view and/or listen to the whole contents or the viewing and/or listening time period would be disadvantageously reduced.

In order to deal with the issue, in the first embodiment illustrated in Figure 6, a caution about the viewing/listening term is displayed to the user at step 604 and, only after playback confirmation 605 by the user, the license acquisition is performed. Here, the caution may be, for example, "When you start playback now, the rental term begins regardless of when the download is completed. Do you really want to start playback now?" Upon receipt of playback confirmation 605, the terminal 101 performs steps 510 through 515 in exactly the same way as in Figure 5, starts chasing playback 606 while downloading 601 the contents.

As has been described, according to the first embodiment of the present invention, a fixed-expiration-time-type contents rental license and a fixed-time-length-type license can be handled at the same time.

Therefore, for example, the following rental agreements can be made. When a user rents contents for an long period of time such as one month, for example, a fixed-expiration-time-type license is given to the user to prioritize quick response. When a user rents contents for a short period of time such as several days, a fixed-time-length license is given to the user to ensure a substantive viewing/listening time period.

The permitted time period can be displayed to the user in a clearly understandable manner.

Using the fixed-time-length-type license can ensure a time length during which the user can in effect view and/or listen to the content.

Using a fixed-expiration-time-type license can start stable playback in a quick response manner. The license conditions are simple and are compatible with the systems that use term information in the t_start to t_end format.

Furthermore, a network contents rental system, a terminal and a server can be provided that have a number of remarkable advantages, such as, that a caution can be presented to the user before chasing playback of a fixed-time-length-type contents and that server facilities do not need to be maintained for an long period of time for a fixed-time-length-type contents that has not yet been viewed and/or listened to.

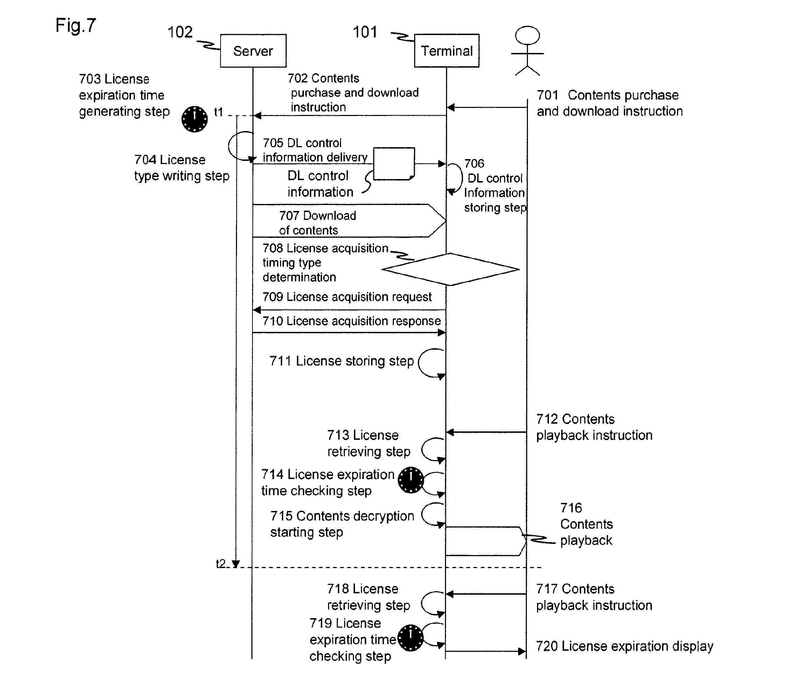

Figure 7 illustrates an operation and communication sequence between the terminal and the server when a user rents contents in the second embodiment. A configuration of a system for performing the sequence is omitted because it is the same as the system in Figure 1.

The server 102 has, as a kind of contents viewing and listening expiration time managements, the function of issuing both of a fixed-expiration-time-type license that specifies a particular time and date range in which contents are permitted to be used and a fixed-time-length-type license that specifies a time length T during which contents are permitted to be used. In addition, the server 102 specifies the immediate-acquisition type or the point-of-use type as the timing of license acquisition.

Here, the immediate-acquisition type is a type which can acquire a license immediately after a license type is determined as described after. And, the point-of-use type is a type which cannot acquire a license before receiving an instruction to use from a user as described after.

The rental is provided under one of the two types of licensing conditions, according to user's demand and each individual contents.

First, a user operates the terminal 101 with a purchase and DL instruction 701 to connect to the server 102 by using a Web browser or other communication application and thereby an AV contents file purchase and DL instruction 702 is sent including an instruction to download the AV contents file under a fixed-expiration-time rental condition. Upon receipt of the contents purchase and download instruction 702, the server 102, at step 703, generates a license that permits to use the contents for the account of the user under the fixed-expiration-time rental condition.

Specifically, the license generation procedure is accomplished by determining a particular date and time range t1 to t2 in which the contents are permitted to be used, writing the date and time range t1 to t2 in the license, and storing it in the control information delivery section 115 in the server 102. Other items of information such as the ID of the licensee terminal 101, the ID of the AV contents file, and an encryption key for the AV contents file are also written in the license.

Then, at step 704, the server 102 writes type information indicating whether the license is of the immediate-acquisition type or the point-of-use type in the DL control information. Since the license has been generated as a fixed-expiration-time-type license at step 703, the server 102 writes usually such information indicating that the license is of the immediate-acquisition type. Here, the DL control information is information used for acquiring contents and the license for the contents and includes the license type information as well as the URL of the contents and the ID of the license. Then, the server 102 sends the DL control information to the terminal 101 at step 705 as a response to the contents purchase and download instruction 702.

Upon receipt of the DL control information, the terminal 101 stores the DL control information in the control information storage section 108 in the terminal 101 at step 706. The terminal 101 then downloads the contents according to the DL control information at step 707. The download is initiated by an issuance of a GET instruction of HTTP to the URL of the contents which is written in the DL control information, and is completed when all of the contents are acquired and stored in the storage section 105 in the terminal 101.

After completion of the download of the contents, at step 708, the terminal 101 reads the DL control information stored in the control information storage section 108 in the terminal 101 and writes it into the control information determination section 109 where the timing of license acquisition is determined. Since the type information indicating the immediate-acquisition type has been written in the DL control information at step 704, the determination is that the license is of the immediate-acquisition type. If the determination is that the license is of the immediate-acquisition type, the terminal 101 in this embodiment determines that the terminal 101 may acquire the license at any point of time before an instruction to use, that is a playback instruction in this embodiment, is issued by the user.

The control information acquisition section 107 of the terminal 101 according to the second embodiment immediately sends a license acquisition request 709 to the server 102 when it determines that the license is of the immediate-acquisition type. Accordingly, in a case of a immediate-acquisition type the terminal 101 issues the license acquisition request immediately after the completion of the download.

The server 102 searches the control information delivery section 115 for the ID of the licensee terminal 101 and the ID of the AV contents file to identify the license and delivers the license through a license acquisition response 710 as a response to the license acquisition request 709. Upon receipt of the license, the terminal 101 stores the license in the terminal 101 at step 711. By passing through the sequence described above, download of the contents and acquisition of the license are completed.

It is assumed that the user then operates the terminal 101 to instruct the terminal 101 to play back the downloaded contents at step 712. The terminal 101 retrieves the license stored at step 713, compares the playback expiration time information t1 to t2 in the license with the current time at step 714 and, if the current time is within the term, starts decrypting the contents by using the encryption key in the license at step 715. By following the sequence, playback 716 of the contents can be performed.

If the user instructs to play back the contents after expiration of the rental period at step 717, comparison of the playback expiration time information t1 to t2 in the license retrieved at step 718 with the current time at step 719 will indicate the expiration of the rental period and therefore a message indicating the expiration will be presented to the user at step 720 without performing playback.

In the second embodiment, the terminal 101 performs license acquisition timing type determination and issuance of a license acquisition request immediately after completion of download. Therefore, the second embodiment has the advantage that the license can be acquired in a stable manner because the determination and issuance of the license acquisition request are performed while communication load is not placed on the terminal 101 after completion of download and because communication has been being successfully performed until just before the license acquisition. The second embodiment has another advantage that the server 102 can detect successful completion of download by receipt of the license acquisition request.

As an alternative to the timing to determine the license acquisition timing type described above, the determination of the license acquisition timing type may be performed immediately before starting the download. That is the timing to determine the license acquisition timing type can be made earlier, thereby to issue a license acquisition request immediately after the determination. According to this method, like the method described above, the license can be acquired while communication load is not place on the terminal 101 and in a state where the same communication conditions under which the contents will be downloaded can be expected. The method has additional advantages that in the event of license acquisition failure, useless download of the contents can be avoided and the so-called chasing playback in which contents are played back while the contents are being downloaded, can be readily performed.

As another alternative to the timing to determine the license acquisition timing type described above, the determination of the license acquisition timing type may be performed immediately after acquisition of a DL control file, and a license acquisition request is issued immediately after the determination. This method has advantages that, like the method described above, the license can be acquired in a stable manner because communication load is not placed on the terminal 101 and because the conditions are likely to be the same as that of the time of successful acquisition of the DL control file immediately before the license acquisition, and that useless download of the contents can be avoided in the event of license acquisition failure, and further that so-called chasing playback in which contents are played back while downloading the contents, can be readily performed. This method has additional advantages that when download of contents cannot immediately be started because there is more than one contents or for some other reason, a license condition for the contents can be immediately determined at the time the user has issued the instruction and the user can resolve abnormality, if any, immediately in an interactive manner.

While license acquisition timing type information is written in DL control information and delivered in the second embodiment, the present invention is not so limited. For example, the terminal 101 may ask the server 102 about the license type. With this method, the server 102 can provide more flexible services such as changing license condition and type while applying the same DL control information.

On the other hand, writing license acquisition timing type information in DL control information or in similar information that is delivered at the same timing of the DL control information and delivering the license acquisition timing type information at the time of the DL instruction as in the second embodiment, have many advantageous effects. For example, the number of transmissions can be reduced. In addition, since license type information is registered in the terminal at the time the result of the DL instruction is registered, the user can readily check the license condition of contents registered in the terminal which is ready to be downloaded. Furthermore, license type information can be separately and readily delivered by using DL control information which can be more simply delivered prior to acquisition of the license itself which needs strict authentication and encryption.

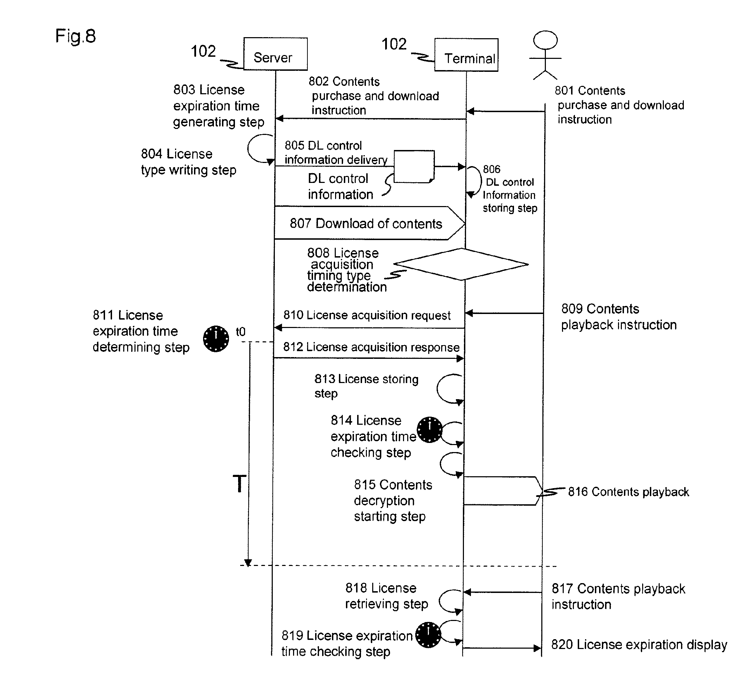

Figure 8 shows an operation and communication sequence between a terminal and a server in an example in which a user rents contents under a fixed-time-length-type license according to the second embodiment. The operation and communication procedure will be described below in order with respect to Figure 8. The terminal 101 and the server 102 in Figure 8 have the same configurations as the equivalent elements illustrated in Figure 1 and therefore are labeled with the same reference numerals. Components such as a network that performs only conventional operation are omitted from the figure.

First, a user operates the terminal 101 with a purchase and DL instruction 801 to connect to the server 102 by using a Web browser or other communication application and an AV contents purchase and DL instruction 802 is sent including an instruction to download the AV contents file under a fixed-time-length rental condition. Upon receipt of the contents purchase and download instruction 802, the server 102, at step 803, generates a license that permits to use the contents for the account of0 the user under the fixed-time-length rental condition.

Specifically, the license generation procedure is accomplished by storing a time length T during which the contents are permitted to be used, in a control information delivery section 115 in the server 102. Other items of information such as the ID of the licensee terminal 101, the ID of the AV contents file, and an encryption key for the AV contents file are also written in the license.

Then, the server 102 writes type information indicating the type of the license indicating whether the license is of the immediate-acquisition type or the point-of-use type in DL control information at step 804. Since the license has been generated as a fixed-time-length-type license at step 803, the server 102 writes usually information indicating that the license is of the point-of-use type. The time length T during which the contents are permitted to be used is also written. In addition, the time limit t3 by which the license can be acquired is written.

The server 102 then delivers the DL control information to the terminal 101 at step 805 as a response to the contents purchase and download instruction 802. Upon receipt of the DL control information, the terminal 101 stores the DL control information in the control information storage section 108 in the terminal 101 at step 806.

The terminal 101 then downloads the contents according to the DL control information at step 807. The download is completed by acquiring and storing all of the contents in a storage section 105 in the terminal 101.

After completion of the download of the content, the terminal 101 reads, at step 808, the DL control information stored in the control information storage section 108 in the terminal 101 and writes it into a control information determination section 109 where the type of the license acquisition timing is determined. Since the type information indicating the point-of-use type has been written in the DL control information at step 804, the determination is that the license acquisition timing is of the point-of-use type. If the determination is that the license acquisition timing is of the point-of-use type, the terminal 101 according to the second embodiment determines that the terminal 101 should not acquire the license until it receives a playback instruction from the user.

It is assumed here that the user then operates the terminal 101 at step 809 to instruct the terminal 101 to play back the downloaded contents. Since the terminal 101 does not hold the license required for playing back the contents, the terminal 101 immediately sends a license acquisition request 810 to the server 102.

Upon receipt of the license acquisition request 810, the server 102 determines a license term, that is, a licensed rental period, at step 811. Specifically, the determination of the license term is accomplished by searching the control information delivery section 115 for the ID of the licensee terminal 101 and the ID of the AV contents file to identify the license, retrieving a permitted time length T, by determining the sum of the current time t0 and T as the expiration date and time, by establishing the license terms as the period between t0 to t0 + T, and by writing the license term in the license.

The server 102 then delivers the license through a license acquisition response 812 as a response to the license acquisition request 810. Upon receipt of the license, the terminal 101 stores the license in the terminal 101 at step 813. Passing through the sequence described above, the license acquisition is completed.

Then, the terminal 101 compares the playback expiration time information t0 to t0 + T in the license with the current time at step 814 and, if the current time is within the expiration time, starts decrypting the contents by using the encryption key in the license at step 815.

If the user issues a contents playback instruction at step 817 after the rental period has expired, comparison at step 819 between the playback expiration time information t0 to t0 + T in the license retrieved at step 818 and the current time will show the expiration of the rental time period. Accordingly, a message indicating the expiration will be presented to the user at step 820 without playing back the contents.

In the period from step 808 to step 809 of the sequence in Figure 8, the point-of-use-type license is held but there is no determined playback expiration time for contents for which the first playback instruction has not been received. This may present the following two issues.

A first issue is that when the user displays a contents list on the terminal 101, the expiration time cannot be displayed. A second issue is that facilities of the server 102 and license information need to be maintained for a long period of time in case that the user does not issue a playback instruction for a considerably long period of time in this state.

Such issues can be solved by using display of the time length information T, or the license acquired time limit t3 as described in the first embodiment.

There is another issue that the so-called chasing playback in which contents are played back while the contents are being downloaded, cannot be performed during the download at steps 707 and 807 in the sequences in Figures 7 and 8 because the license has not yet been acquired. However, this issue also can be solved as described in the first embodiment.

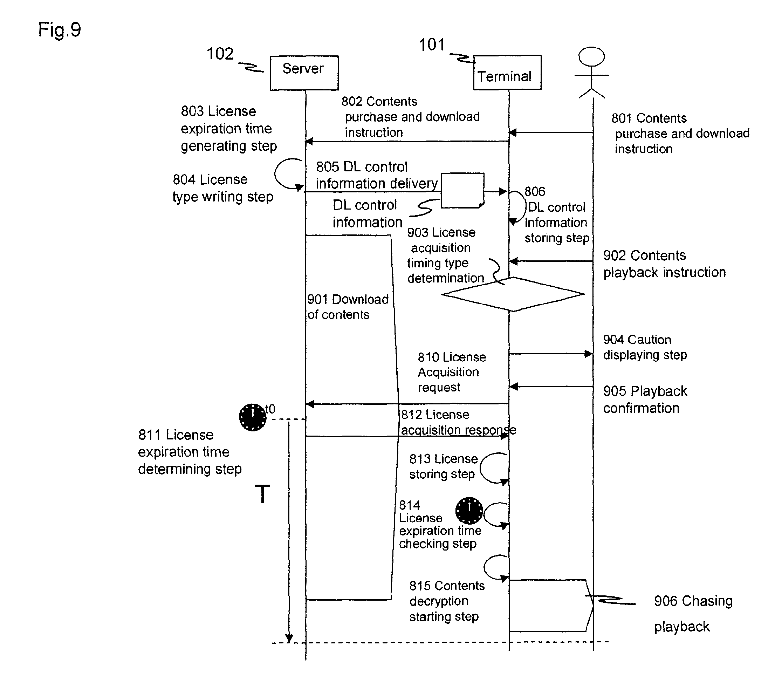

A chasing playback method for a fixed-time-length-type license will be described with respect to Figure 9. Steps 801 through 806 of Figure 9 are exactly the same as steps 801 through 806 of Figure 8 and therefore the description of these steps will be omitted. At step 901, when a chasing playback instruction 902 is received from a user during contents download in step 901, the terminal 101 reads DL control information stored in the control information storage section 108 of the terminal 101 and writes it into the control information determination section 109, where the license acquisition timing type is determined 903. Since type information indicating the point-of-use type has been contained in the DL control information at step 904, it is determined that the license is of the point-of-use type.

In the second embodiment, if the terminal 101 determines that a license is of the point-of-use type, the terminal 101 determines it should not acquire the license until receipt of a playback instruction from the user. In implementation in which chasing playback is possible, the terminal 101 may acquire the license here because the terminal 101 has already received the playback instruction 902. In this case, however, a viewing and/or listening term would be determined by acquisition of the license even if the download of the contents 801 was not successfully completed or took considerably long time. As a result, the user could not be able to view and/or listen to the whole contents or the viewing and/or listening time period would be disadvantageously reduced.

In order to deal with the issue, in the embodiment illustrated in Figure 9, a caution about the viewing/listening term is displayed to the user at step 904 and, only after playback confirmation 905 by the user, the license acquisition is performed. Upon receipt of playback confirmation 905, the terminal 101 performs steps 810 through 815 in exactly the same way as in Figure 8, starts chasing playback 906 while downloading 901 the contents.

As has been described, according to the second embodiment of the present invention, a fixed-expiration-time-type contents rental license and a fixed-time-length-type contents rental license can be handled at the same time. In addition, suitable license acquisition timing type (the immediate-acquisition type or the point-of-use type) for it can be performed.

Therefore, for example, the following rental agreements can be made. When a user rents contents for a long period of time such as one month, for example, a fixed-expiration-time-type license and an immediate-acquisition-type indication are given to the user to prioritize quick response. When a user rents contents for a short period of time such as several days, a fixed-time-length-type license and a point-of-use-type indication are given to the user to ensure a substantive viewing/listening time period.

In the second embodiment as described above, the timing of license acquisition is immediately after the determination of the license under a fixed-expiration-time-type license, and the timing of license acquisition is the time when playback is instructed after the determination of the license under a fixed-time-length-type license. However the present invention is not always limited to these combinations. For example, the present invention includes the following combinations. That is the timing of license acquisition is a point-of-use type under a fixed-expiration-time-type license or the timing of license acquisition an immediate-acquisition type under a fixed-time-length-type license. Such method of the combinations is suitable and can be used depending on the conditions of the download time, the communication environment or the like.

In the first embodiment and the second embodiment described above, the playback instruction 412, 509, 712, 809, 902 are used as an instruction to use by a user according to the present invention. However it is not limited thereto, a dubbing instruction may be used. As well as an instruction to play back, the same sequence can be used in the case of an instruction for dubbing.

Under a fixed-expiration-time-type license described above, the term of t1 to t2 includes the indefinite type of which end point in time is indefinite, that is, t1 to infinity.

The program related to the present invention is the program for enabling the computer to perform the functions of the network audio-video contents playback terminal of the present invention as described above, and the program to operate in cooperation with the computer.

Also, a recording medium related to the present invention records the program for enabling the computer to perform the functions of the network audio-video contents playback terminal of the present invention as described above, and is readable by the computer, whereby the read program performs the functions in cooperation with the computer.

As one use of the program related to the present invention, the program may be recorded in the recording medium such as ROM readable by the computer, and operates in cooperation with the computer.

Also, in another use of the program related to the present invention, the program may be transmitted across the network such as the Internet, or through the transmission media such as light, electric wave or sound wave, read by the computer and may operate in cooperation with the computer.

Also, the computer as described above is not limited to the pure hardware such as CPU, but may comprise a firmware, OS, or peripheral devices.
As described above, the configuration of the present invention may be implemented by software or hardware.

### [Industrial Utility]

According to the present invention, contents rental service that enables video and audio contents to be downloaded through a network and permits a user to play back of the contents for a limited time only, can be implemented. Then such network contents rental can be implemented, that time length during which a user can in effect view and/or listen to contents, is ensured, stable playback can be started in a quick response manner, simple licensing conditions can be realized, and compatibility with systems that use time period information in the t_start to t_end format, is enabled.

In addition, a system terminal and a server which have a number of advantageous effects as follows can be provided. For example, contents available time periods can be presented to a user in a clearly understandable manner even in a case where a fixed-expiration-time-type contents and a fixed-time-length-type contents are hosted at the same time. A caution required to be presented at chasing playback under a fixed-time-length-type contents can be presented to the user. Server facilities do not need to be maintained for a long period of time for a fixed-time-length-type contents that is not viewed or listened to.

## Claims

1. A network AV contents playback terminal which connects to a server on a network, acquires an AV contents by using the connection, acquires a license for the AV contents from the server, stores the license, and uses the AV contents for a predetermined period of time based on the stored license, wherein:
prior to acquiring the license for the AV contents from the server, the terminal determines whether the license is of a fixed-expiration-time type which specifies an available particular date and time range or of a fixed-time-length type which specifies a particular available time length, and changes a timing of acquiring the license from the server in accordance with the determination.

2. The network AV contents playback terminal according to claim 1, wherein
the terminal comprises a storage device, and uses the AV contents after acquiring the AV contents and storing the AV contents in the storage device.

3. The network AV contents playback terminal according to claim 2, wherein
if the determination is that the license for the AV contents is of the fixed-expiration-time type, the terminal acquires the license from the server at a time before starting to use the AV contents; and if the determination is that the license for the AV contents is of the fixed-time-length type, the terminal acquires the license from the server at or after starting to use the AV contents.

4. The network AV contents playback terminal according to claim 3, wherein:
the terminal receives control information which is used for acquiring the AV contents from the server; and
the terminal makes the determination as to whether the license is of the fixed-time-length type or the fixed-expiration-time type by obtaining a license type included in the control information.

5. The network AV contents playback terminal according to claim 4, wherein
the terminal comprises an interface output which displays to a user a time range in which the user is permitted to view and/or listen to the AV contents, and
the control information further includes an acquisition expiration time of the license;
the terminal displays time length information for the license and the license acquisition expiration time for the license through the interface output before the terminal acquires the license from the server, and displays a determined expiration time for the license through the interface output after the terminal has acquired the license from the server.

6. The network AV contents playback terminal according to claim 3, wherein:
if the license for the AV contents is of the fixed-expiration-time type, the terminal acquires the license from the server upon completion of acquisition of the AV contents.

7. The network AV contents playback terminal according to claim 3, comprising an interface output which displays to a user a time range in which the AV contents is permitted to be viewed and/or listened to, wherein:
if the license for the AV contents is of the fixed-time-length type, the terminal displays time length information for the license through the interface output before the terminal acquires the license from the server, and displays a determined expiration time for the license through the interface output after the terminal has acquired the license from the server.

8. The network AV contents playback terminal according to claim 3, comprising an interface input and output which is used by a user to instruct the terminal to use the AV contents, wherein:
if the license for the AV contents is of the fixed-time-length type, the terminal acquires the license from the server immediately when the user instructs the terminal, after completion of acquisition of the AV contents, to use the AV contents; and
if the license for the AV contents is of the fixed-time-length type, the terminal displays a caution to the user through the interface output and thereafter acquires the license from the server, in case that the user instructs the terminal to use the AV contents after the start of acquisition of the AV contents but before completion of the acquisition of the contents.

9. The network AV contents playback terminal according to claim 1, comprising:
a contents acquisition section which acquires an AV contents from the server;
a control information acquisition section which acquires a license for the AV contents from the server; and
a control information determination section which determines, prior to acquiring the license for the AV contents from the server, whether the license is of a fixed-expiration-time type which specifies a particular date and time range in which the contents are permitted to be used or of a fixed-time-length type which specifies a particular time length during which the contents are permitted to be used;
wherein:
the control information acquisition section changes the timing of acquiring the license from the server in accordance with the determination.

10. A network AV contents delivery server which connects to a terminal on a network to deliver AV contents to the terminal, wherein:
the server issues a license for the AV contents to the terminal, the license being available in at least two types, one of the two types being a fixed-expiration-time type which specifies a particular date and time range in which the contents are permitted to be used and the other being a fixed-time-length type which specifies a particular time length during which the contents are permitted to be used; and
prior to delivery of the AV contents, the server sends control information used for acquiring the AV contents to the terminal, the control information containing type information indicating whether the license is of the fixed-time-length type or of the fixed-expiration-time type.

11. A network AV contents delivery server which connects to a terminal on a network to deliver AV contents to the terminal, wherein:
the server issues a license for the AV contents to the terminal, the license being available in at least two types, one of the two types being a fixed-expiration-time type which specifies a particular date and time range in which the contents are permitted to be used and the other being a fixed-time-length type which specifies a particular time length during which the contents are permitted to be used; and
the server responds to a request from the terminal by sending back type information indicating whether the license is of the fixed-time-length type or of the fixed-expiration-time type.

12. A network AV contents delivery system which includes a server and a terminal having a storage device, the server and the terminal being interconnected through a network, the server delivering an AV contents to the terminal and issuing a license for the AV contents to the terminal, the terminal storing the issued license and using the AV contents for a predetermined time length based on the stored license, wherein:
the server issues the license for the AV contents to the terminal, the license being available in at least two types, one of the two types being a fixed-expiration-time type which specifies a particular date and time range in which the AV contents are permitted to be used and the other being a fixed-time-length type which specifies a particular time length during which the AV contents are permitted to be used;
prior to delivery of the AV contents, the server sends control information which is used for acquiring the AV contents to the terminal, the control information containing type information indicating whether the license is of the fixed-time-length type or the fixed-expiration-time type; and
prior to acquiring the license for the AV contents from the server, the terminal determines, on the basis of the control information, whether the license is of the fixed-expiration-time type which specifies a particular date and time range in which the AV contents are permitted to be used or the fixed-time-length type which specifies a particular time length during which the AV contents are permitted to be used and, if the determination is that the license for the AV contents are of the fixed-expiration-time type, the terminal acquires the license from the server at a time point before starting to use the AV contents, and if the determination is that the license for the AV contents is of the fixed-time-length type, the terminal acquires the license from the server at or after starting to use the AV contents.

13. A network AV contents playback terminal which connects to a server on a network, acquires an AV contents by using the connection, acquires a license for the AV contents from the server, stores the license, and uses the AV contents for a predetermined period of time based on the stored license, wherein:
prior to acquiring the license for the AV contents from the server, the terminal determines whether the license is an immediate-acquisition-type license which can be acquired immediately or a point-of-use-acquisition-type license which cannot be acquired until an instruction to use is issued by a user, and changes the timing of acquiring the license from the server in accordance with the determination.

14. The network AV contents playback terminal according to claim 13, comprising a storage device, wherein
the terminal uses the AV contents after acquiring the AV contents and storing the AV contents in the storage device.

15. The network AV contents playback terminal according to claim 14, wherein
if the determination is that the license for the AV contents is of the immediate-acquisition type, the terminal acquires the license from the server at a time point before starting to use the AV contents, and if the determination is that the license for the AV contents is of the point-of-use-acquisition type, the terminal acquires the license from the server upon receipt of an instruction to start to use the AV contents from the user.

16. The network AV contents playback terminal according to claim 15, wherein:
the terminal receives control information which is used for acquiring the AV contents from the server; and
the terminal makes the determination as to whether the license is of the immediate-acquisition type or the point-of-use-acquisition type by obtaining license acquisition timing type information included in the control information.

17. The network AV contents playback terminal according to claim 16, comprising an interface output which displays to a user a time range in which the AV contents are permitted to be viewed and/or listened to, wherein:
the control information further includes an acquisition expiration time of the license; and
the terminal displays time length information for the license and the acquisition expiration time of the license through the interface output before the terminal acquires the license from the server, and displays a determined expiration time for the license through the interface output after the terminal has acquired the license from the server.

18. The network AV contents playback terminal according to claim 15, wherein:
if the license for the AV contents is of the immediate-acquisition type, the terminal acquires the license from the server upon completion of acquisition of the AV contents.

19. The network AV contents playback terminal according to claim 15, comprising an interface output which displays a time range in which the AV contents are permitted to be viewed and/or listened to, wherein:
if the license for the AV contents is of the point-of-use-acquisition type, the terminal displays time length information for the license through the interface output before the terminal acquires the license from the server, and displays a determined expiration time for the license through the interface output after the terminal has acquired the license from the server.

20. The network AV contents playback terminal according to claim 15, comprising interface input and output which is used by a user to instruct the terminal to use the AV contents, wherein:
if the license for the AV contents is of the point-of-use-acquisition type, the terminal acquires the license from the server immediately when the user instructs the terminal, after completion of acquisition of the AV contents, to use the AV contents; and
if the license for the AV contents is of the point-of-use-acquisition type, the terminal displays a caution to the user through the interface output and thereafter acquires the license from the server, in case that the user instructs the terminal to use the AV contents after the start of acquisition of the AV contents but before completion of the acquisition of the contents.

21. The network AV contents playback terminal according to claim 13, comprising:
a contents acquisition section which acquires an AV contents from the server;
a control information acquisition section which acquires a license for the AV contents from the server; and
a control information determination section which determines, prior to acquiring the license for the AV contents from the server, whether the license is an immediate-acquisition-type license which can be acquired immediately or a point-of-use-acquisition-type license which cannot be acquired until an instruction to use is issued by a user;
wherein
the control information acquisition section changes the timing of acquiring the license from the server in accordance with the determination.

22. A network AV contents delivery server which connects to a terminal on a network and delivers AV contents, wherein:
the server issues a license for the AV contents to the terminal,
types of the timing of acquiring the license include at least two types, one of the two types being an immediate-acquisition type which allows the license to be immediately acquired and the other being a point-of-use-acquisition type which does not allow the license to be acquired until an instruction to use is issued by a user; and
prior to delivery of the AV contents, the server sends control information which is used for acquiring the AV contents to the terminal, the control information containing timing type information indicating whether the timing of acquiring the license is of the immediate-acquisition type or the point-of-use-acquisition type.

23. A network AV contents delivery server which connects to a terminal on a network and delivers AV contents, wherein:
the server issues a license for the AV contents to the terminal,
the license is available in at least two types, one of the two types being a fixed-expiration-time type which specifies a particular date and time range in which the contents are permitted to be used and the other being a fixed-time-length type which specifies a particular time length during which the contents are permitted to be used; and
prior to delivery of the AV contents, the server sends control information to the terminal which is used for acquiring the AV contents, the control information containing license acquisition timing information indicating whether the license is an immediate-acquisition-type license which can be immediately obtained or a point-of-use-acquisition-type license which cannot be acquired until an instruction to use is issued by a user; and
if the license is of the fixed-expiration-time type, the server writes, in the control information, that the license is of the immediate-acquisition type, and if the license is of the fixed-time-length type, the server writes, in the control information, that the license is of the point-of-use-acquisition type.

24. A network AV contents delivery system which includes a server and a terminal having a storage device, the server and the terminal being interconnected through a network, the server delivering AV contents to the terminal and issuing a license for the AV contents to the terminal, the terminal storing the issued license and using the AV contents for a predetermined time period based on the stored license, wherein:
the server issues the license for the AV contents to the terminal, the license being available in at least two types, one of the two types being a fixed-expiration-time type which specifies a particular date and time range in which the AV contents are permitted to be used and the other being a fixed-time-length type which specifies a particular time length during which the AV contents are permitted to be used;
prior to delivery of the AV contents, the server sends control information which is used for acquiring the AV contents to the terminal, the control information containing license acquisition timing information indicating whether the license is an immediate-acquisition-type license which can be immediately acquired or a point-of-use-acquisition-type license which cannot be acquired until an instruction to use is issued by a user;
if the license is of the fixed-expiration-time type, the server writes, in the control information, that the license is of the immediate-acquisition type, and if the license is of the fixed-time-length type, the server writes, in the control information, that the license is of the point-of-use-acquisition type; and
prior to acquiring the license for the AV contents from the server, the terminal determines on the basis of the control information whether the license is of the immediate-acquisition type or the point-of-use-acquisition type, and if the terminal determines that the license for the AV contents is of the immediate-acquisition type, the terminal acquires the license from the server at a time point before starting to use the AV contents, and if the terminal determines that the license for the AV contents is of the point-of-use-acquisition type, the terminal acquires the license from the server at or after starting to use the AV contents.
